# FASCICULE DE BREVET EUROPEEN

(11) **EP 3 491 742 B1**
(45) Date de publication et mention de la délivrance du brevet: **22.04.2020**
(21) Numéro de dépôt: 17743053.5
(22) Date de dépôt: 26.07.2017
(51) Int. Cl.: H04B 1/40, H04B 1/10, H04W 52/24

(54) **COEXISTENCE DE MODULES RADIO AU SEIN D'UN DISPOSITIF ÉLECTRONIQUE**
KOEXISTENZ VON FUNKMODULEN IN EINER ELEKTRONISCHEN VORRICHTUNG
COEXISTENCE OF RADIO MODULES WITHIN AN ELECTRONIC DEVICE

(30) Priorité: 26.07.2016 FR 1657169
(43) Date de publication de la demande: 05.06.2019
(73) Titulaire: Sagemcom Broadband SAS, 92500 Rueil-Malmaison (FR)
(72) Inventeur: DEJARDIN, Romain, 92500 Rueil-Malmaison (FR)
(74) Mandataire: Cabinet Le Guen Maillet
(86) Numéro de dépôt international: PCT/EP2017/068848
(87) Numéro de publication internationale: WO 2018/019870

(56) Documents cités:
- EP-A1- 1 710 920
- US-A1- 2003 086 398
- US-A1- 2009 323 652

## Description

La présente invention concerne le domaine des communications radiofréquences, et plus particulièrement celui de la coexistence de modules de communications radiofréquences utilisant une même bande de fréquence au sein d'un dispositif électronique.

Les dispositifs électroniques ont aujourd'hui de plus en plus tendance à embarquer plusieurs technologies radiofréquences (ci-après « radio »), possiblement conforme à différentes normes, mais pouvant utiliser une même bande de fréquence. Cela n'est pas sans poser plusieurs problèmes. Tout d'abord, des problèmes d'interférences entre les différentes technologies radio utilisées peuvent survenir. En effet, les émissions radio d'un premier module émetteur-récepteur radiofréquence (ci-après « module radio ») peuvent perturber les communications établies par un deuxième module radio, et réciproquement. Ensuite, un problème dit « d'éblouissement » d'un module radio par un autre peut survenir. En effet, l'émission d'un signal radio par le premier module radio peut provoquer la saturation en entrée de l'interface radio du deuxième module radio. Ces deux problèmes sont classiquement résolus en assurant une isolation entre les deux modules radio, isolation nécessitant une séparation physique importante, de l'ordre d'une longueur d'onde. Ainsi, pour des modules radio utilisant une bande de fréquence dite ISM (*Industrial*, *Scientific and Medical*, en anglais) autour de 2.4 Ghz (c'est-à-dire une longueur d'onde de 12.5 cm), l'ordre de grandeur de la séparation physique nécessaire entre deux modules radio est au moins de plusieurs centimètres. Il n'est toutefois pas toujours possible de garantir une telle isolation, et ce particulièrement pour des modules radio intégrés dans des dispositifs électroniques de petit facteur de forme, tels des montres connectées, ou partageant une seule et même antenne radio.

La demande de brevet US2009/323652 divulgue un dispositif électronique, qui comporte deux modules radio utilisant une même bande de fréquences et des atténuateurs dynamiques. Il est par conséquent souhaitable de pallier des inconvénients de l'état de la technique relatif à la coexistence des modules radios.

L'invention concerne un dispositif électronique comprenant un premier et un deuxième module radio utilisant une même bande de fréquence radio et comprenant respectivement une première et une deuxième interface radio, le dispositif électronique comprenant un premier et un deuxième atténuateur radio à gain programmable placés respectivement sur la première et la deuxième interface radio, le dispositif électronique étant adapté pour déterminer, pour chaque module radio, une valeur d'une atténuation associée audit module radio, la valeur de l'atténuation étant déterminée en fonction d'une puissance maximale admissible par ledit module radio, d'une puissance d'émission de l'autre module radio et d'une isolation entre la première et la deuxième interface radio, déterminer, pour chaque module radio, une valeur d'un indicateur de qualité d'une communication établie avec ledit module radio et, quand, pour un module radio, la valeur de l'indicateur de qualité est supérieure à une valeur seuil prédéterminée, la valeur seuil prédéterminée étant fonction de la valeur de l'atténuation associée au module radio et d'une puissance minimale admissible par le module radio, programmer le gain de l'atténuateur radio placé sur l'interface du module radio, le gain étant choisi égal à la valeur de l'atténuation associée au module radio.

Avantageusement, le dispositif électronique comprend des atténuateurs radio à gain programmables devant les différentes interfaces radio des modules radio. Une atténuation est calculée, l'atténuation étant calculée de façon à éviter qu'un signal radio émis par un premier module radio ne puisse éblouir l'interface radio d'un deuxième module radio. Dit autrement, l'atténuation est calculée de façon à ce que la puissance d'un signal radio reçue par l'interface radio du premier module radio soit inférieure à la puissance maximale admissible par ledit module radio. Le calcul tient compte d'une isolation existante entre les interfaces radio des modules. Ainsi, la valeur de l'atténuation nécessaire dépend de la puissance du signal radio émis par le premier module radio, de la puissance maximale admissible par le deuxième module radio et de l'isolation entre les deux modules radio. Une fois qu'une valeur de l'atténuation nécessaire pour éviter un éblouissement d'un module radio est connue, un indicateur de qualité d'une communication établie avec ledit module radio est déterminé. Si cet indicateur de qualité de la communication, diminué de la valeur de l'atténuation, permet toujours de maintenir une communication, alors le gain de l'atténuateur radio est programmé avec cette valeur déterminée de l'atténuation. Dit autrement, si la puissance d'un signal radio reçu, indiquée par l'indicateur de qualité, et diminuée de la valeur de l'atténuation calculée, permet toujours de maintenir une puissance de signal reçu supérieure à la puissance minimale admissible par le module radio, alors il est possible de programmer le gain de l'atténuateur radio avec la valeur de l'atténuation calculée. Le signal radio reçu correspond au signal radio émis par un dispositif électronique avec lequel la communication est établie. Ainsi, il est possible de maintenir la communication établie avec le premier module radio tout en évitant tout phénomène d'éblouissement par une émission d'un signal radio par le deuxième module radio. Les deux modules radios peuvent donc cohabiter sans qu'un module radio ne vienne éblouir l'autre module radio en cas d'émission. Chaque module radio peut donc conserver ses particularités temporelles d'accès à la bande de fréquence, c'est-à-dire émettre ou recevoir sans devoir se synchroniser avec l'autre module radio, et conserver ainsi tout son potentiel de débit ou bande passante pour les communications radio établies avec d'autre dispositifs électroniques.

Selon un mode de réalisation complémentaire de l'invention, le dispositif électronique est adapté pour, quand, pour chaque module radio, la valeur de l'indicateur de qualité est supérieure à la valeur seuil prédéterminée, déterminer le module radio ayant la valeur de l'indicateur de qualité d'une communication établie la plus grande et programmer le gain de l'atténuateur radio dudit module radio.

Avantageusement, lorsque, pour chaque module radio, un indicateur de qualité d'une communication établie est supérieur à la valeur seuil prédéterminée, seul le gain de l'atténuateur radio placé sur l'interface radio du module radio possédant la valeur de l'indicateur de qualité la plus grande est programmé. Ainsi, l'atténuation est minimale pour l'autre module radio, tout en prévenant tout risque d'éblouissement entre les deux modules radios. La perturbation sur la qualité des communications établies est ainsi minimale tout en conservant l'avantage de prévenir tout éblouissement entre modules radio.

Selon un mode de réalisation complémentaire de l'invention, le dispositif électronique est en outre adapté pour déterminer, pour un module radio, une première liste comprenant au moins un canal radio compris dans la bande de fréquence, ledit module radio utilisant uniquement un canal compris dans cette première liste pour établir une communication radio et déterminer, pour l'autre module radio, une deuxième liste comprenant au moins un canal radio compris dans la bande de fréquence et non compris dans la première liste, ledit autre module radio utilisant uniquement un canal compris dans cette deuxième liste pour établir une communication radio.

Avantageusement, avant de mettre en œuvre une méthode prévenant les éblouissements entre modules radio, la bande passante est partagée entre les deux modules radio afin de limiter les interférences entre modules radio. La bande passante disponible, utilisée par les deux modules radio, étant classiquement subdivisée en différents canaux, le premier module radio détermine une première liste de canaux utilisés pour ses besoins de communications. Le deuxième module radio utilise alors pour ses propres besoins une deuxième liste de canaux, la deuxième liste ne comprenant pas de canaux présents dans la première liste. Dit autrement, les deux modules radio n'utilisent pas les mêmes canaux disponibles pour communiquer, réduisant les interférences en cas d'émission ou de réception simultanées.

Selon un mode de réalisation complémentaire de l'invention, le dispositif électronique est adapté pour, quand, pour chaque module radio, la valeur de l'indicateur de qualité est inférieure à une valeur seuil prédéterminée, synchroniser le premier et le deuxième module radio afin que le premier et le deuxième module radio soient en phase de réception ou de transmission en même temps.

Lorsque les valeurs des indicateurs de qualité des communications établies ne permettent pas de programmer le gain des atténuateurs radio à la valeur de l'atténuation nécessaire pour éviter un éblouissement entre les modules radio, alors le premier et le deuxième module radio sont synchronisés en phase de réception ou en phase d'émission. Ainsi, si les deux modules radio émettent ou reçoivent en même temps, le phénomène d'éblouissement d'un module radio par un autre ne peut avoir lieu.

Selon un mode de réalisation complémentaire de l'invention, le dispositif électronique comprend un diviseur radio comprenant une entrée connectée à une antenne et deux sorties connectées respectivement au premier et au deuxième atténuateur radio à gain programmable.

Avantageusement, le premier module radio et le deuxième module radio partagent une même antenne afin de réduire les coûts de fabrication et l'encombrement du dispositif électronique. Les deux modules radio sont alors connectés à l'antenne au moyen d'un diviseur (« *splitter* » en anglais). L'isolation entre la première interface radio et la deuxième interface radio est alors fonction du diviseur.

Selon un mode de réalisation complémentaire de l'invention, le dispositif électronique comprend une première et une deuxième antenne, le premier, respectivement le deuxième, atténuateur radio à gain programmable placé sur la première, respectivement la deuxième, interface radio étant connecté à la première, respectivement la deuxième, antenne.

Avantageusement, chaque module radio est connecté à une antenne. L'isolation entre les deux antennes peut alors être optimisée.

Selon un mode de réalisation complémentaire de l'invention, le premier module radio est conforme à une norme *Bluetooth*, le deuxième module radio est conforme à une norme *Zigbee.*

Avantageusement, le dispositif électronique comprend un module radio conforme à une norme *Bluetooth* et un module radio conforme à une norme *Zigbee.*

L'invention concerne également un procédé permettant la coexistence d'un premier et d'un deuxième module radio utilisant une même bande de fréquence au sein d'un dispositif électronique, le premier et le deuxième module radio comprenant respectivement une première et une deuxième interface radio, le dispositif électronique comprenant un premier et un deuxième atténuateur radio à gain programmable placés respectivement sur la première et la deuxième interface radio, le dispositif électronique comprenant un processeur, le procédé étant exécuté par le processeur et comprenant les étapes suivantes : déterminer, pour chaque module radio, une valeur d'une atténuation associée audit module radio, la valeur de l'atténuation étant déterminée en fonction d'une puissance maximale admissible par ledit module radio, d'une puissance maximale d'émission de l'autre module radio et d'une isolation entre la première et la deuxième interface radio, déterminer, pour chaque module radio, une valeur d'un indicateur de qualité d'une communication établie avec ledit module radio et, quand, pour un module radio, la valeur de l'indicateur de qualité est supérieure à une valeur seuil prédéterminée, la valeur seuil prédéterminée étant fonction de la valeur de l'atténuation associée au module radio et d'une puissance minimale admissible par le module radio, programmer le gain de l'atténuateur radio placé sur l'interface du module radio, le gain étant choisi égal à la valeur de l'atténuation associée au module radio.

Selon un mode de réalisation de l'invention, le procédé comprend les étapes préalables suivantes : déterminer, pour un module radio, une première liste comprenant au moins un canal radio compris dans la bande de fréquence, ledit module radio utilisant uniquement un canal compris dans cette première liste pour établir une communication radio et déterminer, pour l'autre module radio, une deuxième liste comprenant au moins un canal radio compris dans la bande de fréquence et non compris dans la première liste, ledit autre module radio utilisant uniquement un canal compris dans cette deuxième liste pour établir une communication radio.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter tout ou partie des étapes mentionnées ci-dessous, lorsque ledit programme est exécuté par le processeur. L'invention concerne également un medium de stockage d'informations comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la **Fig. 1** illustre schématiquement un dispositif électronique comprenant un premier module radio et un deuxième module radio coexistant au sein d'un même dispositif électronique selon un mode de réalisation de l'invention, chaque module radio étant connecté à une antenne ;
- la **Fig. 2** illustre schématiquement un dispositif électronique comprenant un premier module radio et un deuxième module radio coexistant au sein d'un même dispositif électronique selon un mode de réalisation de l'invention, les modules radio étant connectés à une même antenne au travers d'un diviseur ;
- la **Fig. 3** illustre schématiquement un procédé permettant la coexistence d'un premier module radio et d'un deuxième module radio utilisant une même bande de fréquence au sein d'un dispositif électronique selon un mode de réalisation de l'invention.

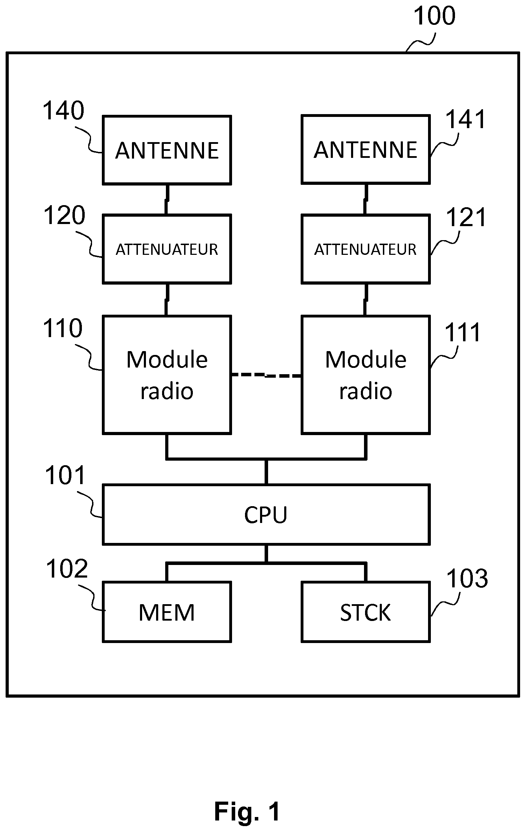

La **Fig. 1** illustre schématiquement un dispositif électronique 100 comprenant un premier module radio 110 et un deuxième module radio 111, le premier module radio 110 étant connecté à une antenne 140 et le deuxième module radio 111 étant connecté à l'antenne 141. Plus précisément, un atténuateur radio à gain programmable 120 (ci-après « atténuateur radio ») est placé sur une interface radio du premier module radio 110, l'atténuateur radio 120 étant connecté à l'antenne 140. L'atténuateur radio 120 est donc disposé entre le module radio 110 et l'antenne 140. L'atténuateur radio 121 est disposé de manière similaire entre le deuxième module radio 111 et l'antenne 141. Un atténuateur radio à gain programmable tel que l'atténuateur radio 120 ou 121 est un dispositif permettant de réduire - ou atténuer - la puissance d'un signal radio. Dit autrement, un atténuateur radio permet de recevoir en entrée un signal radio d'une certaine puissance et de délivrer en sortie le signal radio avec une puissance diminuée. La diminution - ou atténuation - de la puissance est programmable, le gain correspondant à l'atténuation appliquée au signal radio. Typiquement, le gain ou atténuation qu'un atténuateur radio peut appliquer se mesure en dB (décibel) et un atténuateur radio à gain programmable permet d'obtenir une atténuation variant entre 0 dB (c'est-à-dire aucune atténuation) et quelques dizaines de dB. Les atténuateur radio 120 et 121 sont bidirectionnels, c'est-à-dire qu'ils permettent d'appliquer une même atténuation indifféremment à un signal radio qui proviendrait de l'antenne 140 ou 141 et destiné au module radio 110 ou 111, ou inversement à un signal radio émis par le module radio 110 ou 111 et à destination de l'antenne 140 ou 141. Dit autrement, tout signal radio reçu par une antenne 140 ou 141 et transmis à un module radio 110 ou 111, ou bien émis par un module radio 110 ou 111 à destination d'une antenne 140 ou 141, subit une atténuation de sa puissance en traversant un atténuateur radio 120 ou 121, l'atténuation correspondant au gain programmable de l'atténuateur radio 120 ou 121. L'isolation entre les interfaces radio des modules radio 110 et 111 est une valeur, typiquement exprimée en dB (« décibel »). L'isolation est représentative de l'atténuation d'un signal émis par une interface radio et reçue par l'autre interface radio. Une isolation idéale est de l'ordre de 40 dB ou supérieure, c'est-à-dire que tout signal radio émis par un des modules radio serait reçu par l'autre module radio avec une atténuation de 40 dB ou plus. Cependant, comme dit précédemment, pour des raisons de taille de dispositif électronique particulièrement et de bandes de fréquence utilisées, il n'est pas toujours possible de concevoir des dispositifs électroniques comprenant deux modules radio et dont les interfaces radio sont isolées avec une telle valeur d'isolation idéale. Le présent dispositif électronique peut avantageusement comprendre une isolation entre les interfaces radio des modules radio 110 et 111 de l'ordre de seulement quelques décibels (dB).

Le dispositif électronique 100 comporte, reliés par un bus de communication : un processeur ou CPU (« *Central Processing Unit* » en anglais) 101 ; une mémoire MEM 102 de type RAM (« *Random Access Memory* » en anglais) et/ou ROM (« *Read Only Memory* » en anglais) et un module de stockage STCK 103 de type stockage interne. Le dispositif électronique 100 peut comprendre d'autres modules 104 et/ou 105 suivant la nature du dispositif électronique 100. Le module de stockage STCK 103 peut être de type disque dur HDD (« *Hard Disk Drive* » en anglais) ou SSD (« *Solid-State Drive* » en anglais), ou de type lecteur de support de stockage externe, tel un lecteur de cartes SD (« *Secure Digital* » en anglais). Le processeur CPU 101 peut enregistrer des données sur le module de stockage STCK 103 ou lire des données enregistrées sur le module de stockage STCK 103. Ces données peuvent correspondre à des paramètres de configuration du dispositif électronique 100 ou à des informations reçues par exemple dans un message reçu par l'un des modules radio 110 ou 111, ou via un autre module de communication. Les modules radio 110 et 111 peuvent être conformes à une norme de type *WiFi™* (« *Wireless-Fidelity »* en anglais), *Bluetooth™*, *Zigbee™,* GPRS (« *General Packet Radio Service* - *GPRS »* en anglais), une norme de téléphonie mobile de troisième génération (par exemple « *Universal Mobile Telecommunications System* - *UMTS »* en anglais), une norme de téléphonie mobile de quatrième génération (par exemple « *Long Term Evolution* - *LTE »* en anglais) ou toute autre norme de téléphonie mobile.

Le processeur CPU 101 est capable d'exécuter des instructions chargées dans la mémoire MEM 102, par exemple à partir du module de stockage STCK 103 ou d'un réseau de communication via un module radio 110 ou 111, ou d'un autre module de communication. Lorsque le dispositif électronique 100 est mis sous tension, le processeur CPU 101 est capable de lire de la mémoire MEM 102 des instructions et de les exécuter. Ces instructions forment un programme d'ordinateur causant la mise en œuvre, par le processeur CPU 101, de tout ou partie des procédés et étapes décrits ci-après. Ainsi, tout ou partie des procédés et étapes décrits ci-après peut être implémenté sous forme logicielle par exécution d'un ensemble d'instructions par une machine programmable, tel qu'un DSP (« *Digital Signal Processor »* en anglais) ou un microcontrôleur. Tout ou partie des procédés et étapes décrits ici peut aussi être implémenté sous forme matérielle par une machine ou un composant dédié, tel qu'un FPGA (« *Field-Programmable Gate Array »* en anglais) ou un ASIC (« *Application-Specific Integrated Circui »t* en anglais).

Le processeur CPU 101 est en particulier adapté pour déterminer, pour chaque module radio 110 et 111, une valeur d'une atténuation associée audit module radio, la valeur de l'atténuation étant déterminée en fonction d'une puissance maximale admissible par ledit module radio, d'une puissance d'émission de l'autre module radio et de l'isolation entre la première et la deuxième interface radio. Dit autrement, le processeur CPU 101 est adapté pour déterminer une valeur de l'atténuation nécessaire à appliquer en entrée de l'interface radio d'un premier module radio afin qu'un signal radio émis par le deuxième module radio n'éblouisse pas l'interface radio du premier module radio. On dit qu'un signal radio éblouit l'interface radio d'un module radio lorsque le module radio reçoit le signal radio avec une puissance supérieure à la puissance maximale admissible par ce module radio. Dit autrement, la puissance du signal radio reçue par le module radio étant supérieure à la puissance maximale admissible, un phénomène de saturation de l'interface radio se produit. L'atténuation déterminée par le processeur CPU 101, en complément de l'isolation existante entre les modules radios, correspond à une atténuation permettant d'éviter le phénomène d'éblouissement d'un module radio par l'autre module radio, et vice-versa. Le processeur CPU 101 détermine ainsi une première valeur d'une atténuation associée au premier module radio 110 et une deuxième valeur d'une atténuation associée au module radio 111.

Le processeur CPU 101 est adapté pour déterminer, pour chaque module radio 110 et 111, une valeur d'un indicateur de qualité d'une communication établie avec ledit module radio. Cet indicateur de qualité d'une communication est typiquement égal au paramètre dit « LQI » (« *Link Quality Indicator* » en anglais) tel que défini par la norme IEEE 802.15.4 (« *Institute of Electrical and Electronics Engineers* » en anglais), section 6.9.8 ou par la norme IEEE 802.15.1, section 7.5.3. L'indicateur de qualité d'une communication est typiquement exprimé en dBm (ou « décibel-milliwatts », rapport de puissance en décibels entre une puissance mesurée et une puissance de référence de 1 milliwatt). L'indicateur de qualité est particulièrement lié à la qualité de réception d'un signal radio émis à destination du module radio. Dit autrement, l'indicateur de qualité peut être associé à une puissance d'un signal radio reçu par le module radio 110 ou le module radio 111. L'association entre une valeur d'un indicateur de qualité et un niveau de puissance d'un signal radio reçu par un module radio peut nécessiter une étape d'étalonnage préalable du module radio au sein du dispositif électronique 100.

Le processeur CPU 101 est adapté pour comparer, pour chaque module radio 110 et 111, la valeur de l'indicateur de qualité précédemment déterminée avec une valeur seuil prédéterminée. La valeur seuil prédéterminée, possiblement différente pour chaque module radio, est fonction de la valeur de l'atténuation associée au module radio et d'une puissance minimale admissible pour ce même module radio. Dit autrement, le processeur CPU 101 détermine, pour chaque module radio 110 et 111, si la communication établie avec le module radio 110 ou 111 peut être atténuée d'une valeur correspondant à la valeur de l'atténuation associée audit module radio sans que la communication établie ne soit coupée. En effet, il est possible qu'avec une atténuation, la puissance reçue d'un signal radio émis par un dispositif électronique avec lequel la communication est établie devienne alors plus faible que la puissance minimale admissible par le module radio. Par conséquent, la communication établie peut être perdue. Quand, pour un module radio 110 ou 111, la valeur de l'indicateur de qualité est supérieure à la valeur seuil prédéterminée, alors le processeur CPU 101 peut programmer le gain de l'atténuateur radio placé sur l'interface du module radio concerné, le gain étant choisi égal à la valeur de l'atténuation associée audit module radio. Dit autrement, s'il est possible de placer une atténuation de valeur égale à l'atténuation associée à un module radio sans pour autant couper une communication établie, alors le gain de l'atténuateur à gain programmable placé sur l'interface du module radio concerné est programmé à ladite valeur d'atténuation. Ainsi, la communication précédemment établie reste établie après mise en place de l'atténuation, et, en même temps, le module radio est protégé de tout risque d'éblouissement par une émission d'un signal radio par l'autre module radio. Les deux modules radio 110 et 111 peuvent donc coexister au sein du même dispositif électronique 100, sans risque d'éblouissement d'un module radio par l'autre.

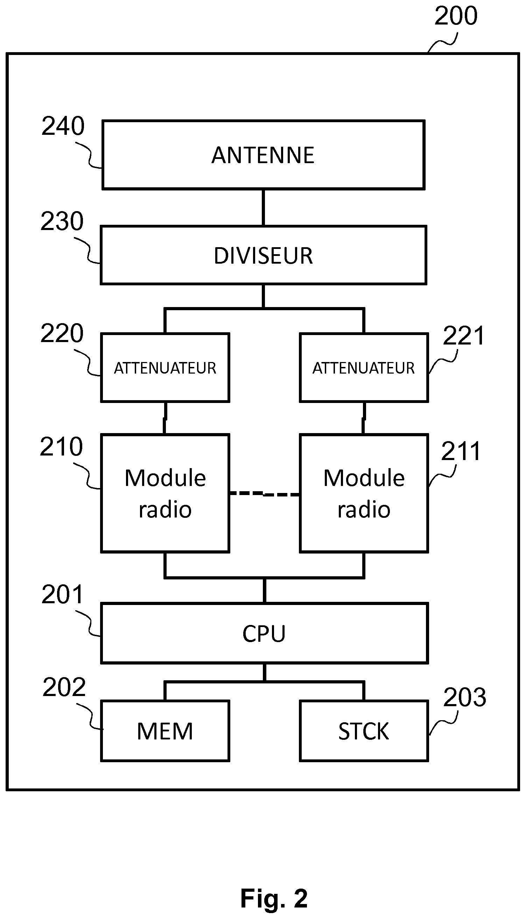

La **Fig. 2** illustre schématiquement un dispositif électronique 200 comprenant un premier module radio 210 et un deuxième module radio 211, les modules radio étant connectés à une même antenne 240 au travers d'un diviseur 230 (« *splitter* » en anglais). Le module 201, respectivement 202, 203, 204, 205, 210, 211, 220 et 221, de la FIG. 2 est similaire au module 101, respectivement 102, 103, 104, 105, 110, 111, 120 et 121, de la FIG. 1 et précédemment décrit. Contrairement au dispositif électronique 100, le dispositif électronique 200 ne comprend qu'une seule antenne 240, partagée au moyen d'un diviseur 230 pour être utilisée par les modules radio 210 et 211. L'isolation entre l'interface radio du module radio 210 et l'interface radio du module radio 211 est alors principalement déterminée par les caractéristiques du diviseur 230. A cette différence près, le dispositif électronique 200 est similaire au dispositif électronique 100, et plus particulièrement le processeur 201 est adapté pour réaliser les mêmes fonctions ou étapes que le processeur CPU 101.

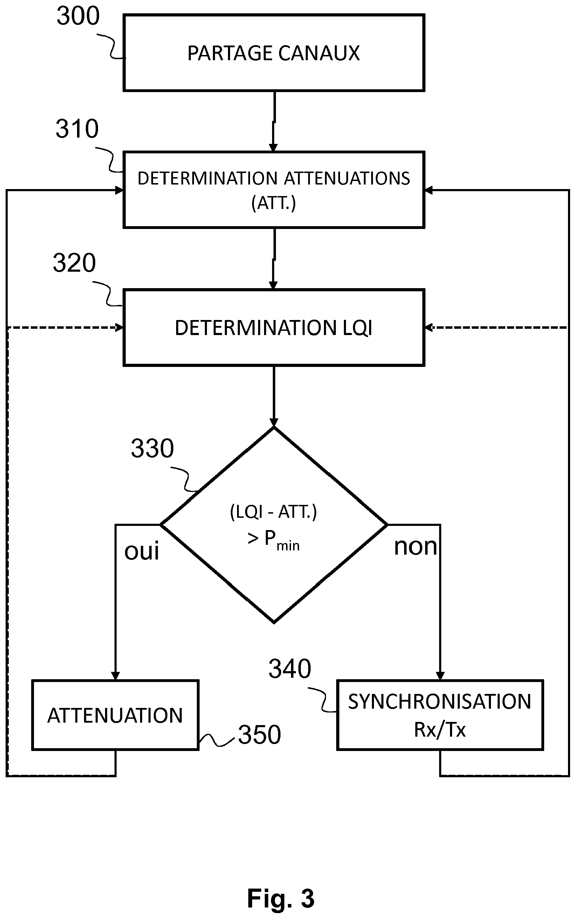

La **Fig. 3** illustre schématiquement un procédé permettant la coexistence d'un premier module radio 110, 210 et d'un deuxième module radio 111, 211 utilisant une même bande de fréquence au sein d'un dispositif électronique 100, 200 selon un mode de réalisation de l'invention. Par simplification, le procédé est décrit ci-après pour le cas du dispositif électronique 100, mais le procédé peut être mis en œuvre de façon similaire par le dispositif électronique 200.

Dans une première étape 300, optionnelle, le dispositif électronique 100 détermine, pour un module radio, une première liste comprenant au moins un canal radio compris dans la bande de fréquence, ledit module radio utilisant uniquement un canal compris dans cette première liste pour établir une communication radio. Le dispositif électronique 100 détermine ensuite, pour l'autre module radio, une deuxième liste comprenant au moins un canal radio compris dans la bande de fréquence et non compris dans la première liste, ledit autre module radio utilisant uniquement un canal compris dans cette deuxième liste pour établir une communication radio. Ainsi, chaque module radio utilise des canaux de la bande de fréquence différents, ce qui réduit les phénomènes d'interférences entre les deux modules radio.

Selon un mode de réalisation, l'étape 300 peut être mise en œuvre directement entre les deux modules radio 110 et 111, en modifiant par exemple les logiciels de fonctionnement des modules radio (« *firmware* » en anglais), les deux modules radio communicant directement entre eux. Selon un autre mode de réalisation, chaque module radio 110 et 111 est piloté par le processeur CPU 101, ledit processeur CPU 101 gérant la communication entre les deux modules radios 110 et 111.

Dans le cas où le premier module radio 110 est conforme à une norme *Zigbee* et le deuxième module radio 111 est conforme à une norme *Bluetooth*, l'étape 300 se décompose ainsi :
- le module radio 110 *Zigbee* sélectionne un canal parmi les canaux de la bande de fréquence, selon une méthode usuelle telle que définie par la norme *Zigbee*,
- l'option de « *Frequency Agility* » (en anglais) du module radio 110 *Zigbee* est possiblement désactivée,
- le choix du ou des canaux est transmis au module radio 111, soit directement par un échange de messages entre les deux modules radios 110 et 111, soit au travers du processeur CPU 101,
- le module radio 111 *Bluetooth* écarte le ou les canaux choisis par le module radio 110 *Zigbee* d'une table (ou liste) dite « AFH » (« *Adaptive Frequency Hopping* » en anglais) dans laquelle sont choisis les canaux utilisés par le module radio 111 *Bluetooth* pour communiquer.

Dans une deuxième étape 310, le processeur CPU 101 détermine pour chaque module radio 110 et 111, une valeur d'une atténuation associée au module radio, la valeur de l'atténuation étant déterminée en fonction d'une puissance maximale admissible par ledit module radio, d'une puissance maximale d'émission de l'autre module radio et d'une isolation entre la première et la deuxième interface radio. L'atténuation associée à un premier module radio correspond ainsi à une valeur d'atténuation permettant d'atténuer suffisamment un signal radio émis par le deuxième module radio afin de ne pas saturer l'interface radio du premier module radio, la puissance reçue étant alors inférieure à la puissance maximale admissible par le premier module radio. En effet, l'isolation et l'atténuation permettent de diminuer la puissance reçue du signal radio émis par le deuxième module radio et reçu par le premier module radio. Cette étape 310 peut être renouvelée périodiquement, en particulier si la puissance d'émission d'un module radio est variable dans le temps. Ainsi, une nouvelle valeur d'atténuation associée à un premier module radio peut être déterminée à chaque fois que la puissance d'émission du deuxième module radio change, et inversement pour une nouvelle valeur d'atténuation associée au deuxième module radio.

Dans une troisième étape 320, le processeur CPU 101 détermine, pour chaque module radio 110 et 111, une valeur d'un indicateur de qualité d'une communication établie avec ledit module radio. L'indicateur de qualité correspond typiquement au paramètre « LQI » (« *Link Quality Indicator* » en anglais) tel que défini dans les normes IEEE 802.15.4, section 6.9.8 ou IEEE 802.15.1, section 7.5.3. Une étape d'étalonnage préalable peut permettre d'associer à chaque valeur de LQI une puissance de signal radio reçue par un module radio 110 ou 111. L'indicateur de qualité peut représenter directement une valeur de la puissance de signal radio reçue par le module radio 110 ou le module radio 111 lors d'une communication établie avec un autre dispositif électronique. Un indicateur de qualité distinct est déterminé pour chaque module radio 110 et 111.

Dans une quatrième étape 330, le processeur CPU 101 détermine si, pour chaque module radio 110 ou 111, la valeur de l'indicateur de qualité déterminé lors de l'étape 320 pour ledit module radio 110 ou 111 est supérieure à une valeur seuil prédéterminée. La valeur seuil prédéterminée est fonction de la valeur de l'atténuation associée au module radio 110 ou 111, déterminée lors de l'étape 310, et d'une puissance minimale admissible (« Pₘᵢₙ ») par le module radio 110 ou 111. Dit autrement, le processeur CPU 101 détermine, pour chaque module radio 110 et 111, si la communication établie avec un module radio peut être atténuée d'une valeur correspondant à la valeur de l'atténuation associé audit module radio sans que la communication établie ne soit coupée parce que la puissance du signal radio reçu correspondant à la communication établie deviendrait inférieure à la puissance minimale admissible. La puissance minimale admissible d'un module radio est la puissance minimale d'un signal radio que peut utilement recevoir un module radio. En deçà de cette puissance minimale admissible, une communication ne peut pas être établie. Dans le cas positif, c'est-à-dire si l'une des valeurs de l'indicateur de qualité est supérieure à une valeur seuil prédéterminée pour le module radio 110 ou le module radio 111, le processeur exécute ensuite l'étape 350, dans le cas contraire, l'étape 340.

Dans l'étape 340, le dispositif électronique 100 synchronise le premier module radio 110 et le deuxième module radio 111 afin que le premier module radio 110 et le deuxième module radio 111 soient en phase de réception ou en phase de transmission en même temps. Selon un mode de réalisation de l'invention, la synchronisation peut être mise en place par le processeur CPU 101, qui pilote alors les phases d'émissions et de réceptions des modules radio 110 et 111. Selon un autre mode de réalisation de l'invention, la synchronisation peut être obtenue par des échanges de signaux logiques entre le module radio 110 et le module radio 111, typiquement via un port *GPIO* (« *General Purpose Input*/*Output* » en anglais) présent sur chaque module radio. Le processeur CPU 101 n'est alors pas utilisé pour obtenir la synchronisation. Selon un mode de réalisation complémentaire de l'invention, le premier module radio 110 est considéré comme étant un module dit « maître », le deuxième module radio 111, dit « esclave », se synchronisant sur les phases d'émission ou de réception du premier module radio 110. Selon un mode de réalisation alternatif de l'invention, le deuxième module radio 111 est le module radio dit « maître » et le premier module radio 110 est le module radio dit « esclave ». Suite à l'étape 340, le procédé peut comprendre l'exécution d'une nouvelle étape 310, particulièrement s'il est nécessaire de déterminer une nouvelle valeur d'une atténuation suite à un changement de puissance d'émission du module radio 110 ou 111. Alternativement, suite à l'étape 340, le procédé peut comprendre l'exécution de l'étape 320 afin de prendre en compte l'évolution temporelle des indicateurs de qualité des communications établies avec les modules radio 110 et 111. Les étapes du procédé sont ainsi exécutées de façons itératives. Dans le cas où il est nécessaire d'adapter le procédé aux évolutions temporelles à la fois de chaque indicateur de qualité et des puissances d'émission des modules radio 110 et 111, l'étape 340 est suivie de l'étape 310.

Dans l'étape 350, le processeur CPU 101 programme le gain de l'atténuateur radio 120 ou 121 placé sur l'interface du module radio 110 ou 111, le gain étant choisi égal à la valeur de l'atténuation associée au module radio 110 ou 111. Dans le cas où seule l'une des valeurs de l'indicateur de qualité est supérieure à une valeur seuil prédéterminée, pour le module radio 110 ou le module radio 111, alors la valeur de l'atténuateur radio à gain programmable correspondant est programmée. L'autre atténuateur radio à gain programmable est laissé par défaut - avant programmation - à sa valeur « zéro », correspondant à une atténuation nulle (fonction « *passthrough* » en anglais, aucune atténuation). Dit autrement, si, pour le premier module radio 110, la valeur de l'indicateur de qualité est supérieure à la valeur seuil prédéterminée, alors l'atténuateur radio 110 est programmé avec un gain égal à la valeur de l'atténuation associée au premier module radio 110. L'atténuateur radio 121 est laissé en fonction « *passthrough* », c'est-à-dire sans aucune atténuation. Et inversement si, pour le deuxième module radio 111, la valeur de l'indicateur de qualité est supérieure à la valeur seuil prédéterminée. Dans le cas où la valeur de l'indicateur de qualité est supérieure à la valeur seuil prédéterminée pour chacun des deux modules radio 110 et 111, alors le processeur CPU 101 détermine le module radio 110 ou 111 ayant la valeur de l'indicateur de qualité de liaison la plus grande et programme seulement le gain de l'atténuateur radio dudit module radio 110 ou 111. Avantageusement, les modules radio 110 et 111 peuvent alors émettre ou recevoir indépendamment l'un de l'autre. Chaque module radio 110 et 111 peut donc mettre en œuvre une méthode d'accès propre et maximiser son utilisation de la bande passante disponible.

Suite à l'étape 350, le procédé peut comprendre l'exécution d'une nouvelle étape 310, particulièrement s'il est nécessaire de déterminer une nouvelle valeur d'une atténuation suite à un changement de puissance d'émission du module radio 110 ou 111. Alternativement, suite à l'étape 350, le procédé peut comprendre l'exécution de l'étape 320 afin de prendre en compte l'évolution temporelle des indicateurs de qualité des communications établies avec les modules radios 110 et 111. Les étapes du procédé sont ainsi exécutées de façon itérative. Dans le cas où il est nécessaire d'adapter le procédé aux évolutions temporelles à la fois de chaque indicateur de qualité et des puissances d'émission des modules radios 110 et 111, l'étape 350 est suivie de l'étape 310.

Selon un mode préférentiel de réalisation de la présente invention, un atténuateur radio à gain programmable utilisé a par défaut un gain nul, c'est-à-dire que l'atténuation est nulle (« *passthrough* ») avant programmation. Dans le cas contraire, si l'atténuateur radio ne présente pas un gain nul, le gain minimal de l'atténuateur radio est considéré comme étant une isolation supplémentaire et est pris en compte dans le procédé précédemment décrit en étant ajouté à l'isolation. Par gain minimal, on entend ici l'atténuation la plus faible de l'atténuateur radio en termes de valeur absolue de l'atténuation.

## Revendications

1. Dispositif électronique (100, 200) comprenant un premier et un deuxième module radio (110, 111, 210, 211) utilisant une même bande de fréquence radio et comprenant respectivement une première et une deuxième interface radio, le dispositif électronique comprenant un premier et un deuxième atténuateurs radio dont l'atténuation est programmable (120, 121, 220, 221) placés respectivement sur la première et la deuxième interface radio, le dispositif électronique étant adapté pour :
- déterminer, pour chaque module radio, une valeur d'une atténuation associée audit module radio, la valeur de l'atténuation étant déterminée en fonction d'une puissance maximale admissible par ledit module radio, d'une puissance d'émission de l'autre module radio et d'une isolation entre la première et la deuxième interface radio,
- déterminer, pour chaque module radio, une valeur d'un indicateur de qualité d'une communication établie avec ledit module radio, et,
quand, pour le premier ou respectivement le second module radio, la valeur de l'indicateur de qualité est supérieure à une valeur seuil prédéterminée, la valeur seuil prédéterminée étant fonction de la valeur de l'atténuation associée au premier ou respectivement au second module radio et d'une puissance minimale admissible par le premier ou respectivement le second module radio :
- programmer l'atténuation de l'atténuateur radio placé sur l'interface du premier ou respectivement du second module radio, l'atténuation étant choisie égale à la valeur de l'atténuation associée au premier ou respectivement au second module radio.

2. Dispositif électronique selon la revendication 1, **caractérisé en ce que** le dispositif électronique étant adapté pour, quand, pour chaque module radio, la valeur de l'indicateur de qualité est supérieure à la valeur seuil prédéterminée :
- déterminer le module radio ayant la valeur de l'indicateur de qualité d'une communication établie la plus grande, et,
- programmer l'atténuation de l'atténuateur radio dudit module radio déterminé.

3. Dispositif électronique selon la revendication 1 ou 2, **caractérisé en ce que** le dispositif électronique étant en outre adapté pour :
- déterminer, pour le premier ou respectivement le second module radio, une première liste comprenant au moins un canal radio compris dans la bande de fréquence, le premier ou respectivement le second module radio utilisant uniquement un canal compris dans cette première liste pour établir une communication radio,
- déterminer, pour l'autre module radio, une deuxième liste comprenant au moins un canal radio compris dans la bande de fréquence et non compris dans la première liste, ledit autre module radio utilisant uniquement un canal compris dans cette deuxième liste pour établir une communication radio.

4. Dispositif électronique selon la revendication 1, 2 ou 3, **caractérisé en ce que** le dispositif électronique étant adapté pour, quand, pour chaque module radio, la valeur de l'indicateur de qualité est inférieure à une valeur seuil prédéterminée :
- synchroniser le premier et le deuxième modules radio afin que le premier et le deuxième modules radio soient en phase de réception ou de transmission en même temps.

5. Dispositif électronique (200) selon la revendication 1, 2, 3 ou 4, **caractérisé en ce que** le dispositif électronique comprenant un diviseur radio (230) comprenant une entrée connectée à une antenne et deux sorties connectées respectivement au premier et au deuxième atténuateur radio dont l'atténuation est programmable (220, 221).

6. Dispositif électronique (100) selon la revendication 1, 2, 3 ou 4, **caractérisé en ce que** le dispositif électronique comprenant une première et une deuxième antenne (140, 141), le premier, respectivement le deuxième, atténuateur radio à gain programmable placé sur la première, respectivement la deuxième, interface radio étant connecté à la première, respectivement la deuxième, antenne.

7. Dispositif électronique (100, 200) selon la revendication 1, 2, 3, 4, 5 ou 6, **caractérisé en ce que** le premier module radio étant conforme à une norme Bluetooth, le deuxième module radio étant conforme à une norme Zigbee.

8. Procédé étant exécuté par un dispositif électronique (100, 200) et permettant la coexistence d'un premier et d'un deuxième module radio (110, 111, 210, 211) utilisant une même bande de fréquence au sein du dispositif électronique (100, 200), le premier et le deuxième module radio comprenant respectivement une première et une deuxième interface radio, le dispositif électronique comprenant un premier et un deuxième atténuateurs radio dont l'atténuation est programmable (120, 121, 220, 221) placés respectivement sur la première et la deuxième interface radio, le dispositif électronique comprenant un processeur, le procédé comprenant les étapes suivantes :
- déterminer (310), pour chaque module radio, une valeur d'une atténuation associée audit module radio, la valeur de l'atténuation étant déterminée en fonction d'une puissance maximale admissible par ledit module radio, d'une puissance maximale d'émission de l'autre module radio et d'une isolation entre la première et la deuxième interface radio,
- déterminer (320), pour chaque module radio, une valeur d'un indicateur de qualité d'une communication établie avec ledit module radio, et,
quand, pour le premier ou respectivement le second module radio, la valeur de l'indicateur de qualité est supérieure à une valeur seuil prédéterminée (330), la valeur seuil prédéterminée étant fonction de la valeur de l'atténuation associée au premier ou respectivement au second module radio et d'une puissance minimale admissible par le premier ou respectivement le second module radio :
- programmer (350) l'atténuation de l'atténuateur radio placé sur l'interface du module radio, l'atténuationétant choisie égale à la valeur de l'atténuation associée au premier ou respectivement au second module radio.

9. Procédé selon la revendication 8, **caractérisé en ce que** le procédé comprend les étapes préalables suivantes :
- déterminer (300), pour le premier ou respectivement le second module radio, une première liste comprenant au moins un canal radio compris dans la bande de fréquence, ledit module radio utilisant uniquement un canal compris dans cette première liste pour établir une communication radio,
- déterminer (300), pour l'autre module radio, une deuxième liste comprenant au moins un canal radio compris dans la bande de fréquence et non compris dans la première liste, ledit autre module radio utilisant uniquement un canal compris dans cette deuxième liste pour établir une communication radio.

10. Programme d'ordinateur, **caractérisé en ce qu'**il comprend des instructions pour mettre en œuvre, par un processeur (101, 201), le procédé selon l'une quelconque des revendications 8 ou 9 permettant la coexistence d'un premier et d'un deuxième module radio (110, 111, 210, 211) utilisant une même bande de fréquence au sein d'un dispositif électronique (100, 200), lorsque ledit programme d'ordinateur est exécuté par ledit processeur.

11. Medium de stockage d'informations comprenant un programme d'ordinateur selon la revendication précédente.

## Patentansprüche

1. Elektronische Vorrichtung (100, 200) umfassend ein erstes und zweites Funkmodul (110, 111, 210, 211), die ein gleiches Funkfrequenzband nutzen und jeweils eine erste und zweite Funkschnittstelle umfassen, die elektronische Vorrichtung umfassend einen ersten und zweiten Funkdämpfer, deren Dämpfung programmierbar ist (120, 121, 220, 221), die jeweils auf der ersten und zweiten Funkschnittstelle angeordnet sind, wobei die elektronische Vorrichtung geeignet ist:
- für jedes Funkmodul einen Wert einer Dämpfung zu bestimmen, der dem Funkmodul zugeordnet ist, wobei der Wert der Dämpfung in Abhängigkeit von einer maximalen zulässigen Leistung für das Funkmodul, einer Sendeleistung des anderen Funkmoduls und einer Isolierung zwischen der ersten und zweiten Funkschnittstelle bestimmt wird,
- für jedes Funkmodul einen Wert eines Qualitätsindikators einer Kommunikation zu bestimmen, die mit dem Funkmodul aufgebaut ist, und,
wenn für das erste beziehungsweise zweite Funkmodul der Wert des Qualitätsindikators größer als ein vorbestimmter Schwellenwert ist, wobei der vorbestimmte Schwellenwert von dem Wert der Dämpfung, der dem ersten beziehungsweise zweiten Funkmodul zugeordnet ist, und einer minimalen zulässigen Leistung für das erste beziehungsweise zweite Funkmodul abhängig ist:
- die Dämpfung des Funkdämpfers zu programmieren, der auf der Funkschnittstelle des ersten beziehungsweise zweiten Funkmoduls angeordnet ist, wobei die Dämpfung so gewählt wird, dass sie gleich dem Wert der Dämpfung ist, der dem ersten beziehungsweise zweiten Funkmodul zugeordnet ist.

2. Elektronische Vorrichtung nach Anspruch 1, **dadurch gekennzeichnet, dass** die elektronische Vorrichtung geeignet ist, wenn für jedes Funkmodul der Wert des Qualitätsindikators größer als der vorbestimmte Schwellenwert ist:
- das Funkmodul zu bestimmen, das den größten Wert des Qualitätsindikators einer aufgebauten Kommunikation aufweist, und
- die Dämpfung des Funkdämpfers des bestimmten Funkmoduls zu programmieren.

3. Elektronische Vorrichtung nach Anspruch 1 oder 2, **dadurch gekennzeichnet, dass** die elektronische Vorrichtung ferner geeignet ist:
- für das erste beziehungsweise zweite Funkmodul eine erste Liste zu bestimmen, die mindestens einen Funkkanal umfasst, der in dem Frequenzband enthalten ist, wobei das erste beziehungsweise zweite Funkmodul nur einen Kanal nutzen, der in dieser ersten Liste enthalten ist, um eine Funkkommunikation aufzubauen,
- für das andere Funkmodul eine zweite Liste zu bestimmen, die mindestens einen Funkkanal umfasst, der in dem Frequenzband enthalten ist und nicht in der ersten Liste enthalten ist, wobei das andere Funkmodul nur einen Kanal nutzt, der in dieser zweiten Liste enthalten ist, um eine Funkkommunikation aufzubauen.

4. Elektronische Vorrichtung nach Anspruch 1, 2 oder 3, **dadurch gekennzeichnet, dass** die elektronische Vorrichtung geeignet ist, wenn für jedes Funkmodul der Wert des Qualitätsindikators kleiner als ein vorbestimmter Schwellenwert ist:
- das erste und das zweite Funkmodul zu synchronisieren, damit sich das erste und zweite Funkmodul gleichzeitig in der Empfangs- oder Übertragungsphase befinden.

5. Elektronische Vorrichtung (200) nach Anspruch 1, 2, 3 oder 4, **dadurch gekennzeichnet, dass** die elektronische Vorrichtung einen Funkteiler (230) umfassend einen Eingang, der mit einer Antenne verbunden ist, und zwei Ausgänge, die jeweils mit dem ersten und zweiten Funkdämpfer verbunden sind, deren Dämpfung programmierbar ist (220, 221), umfasst.

6. Elektronische Vorrichtung (100) nach Anspruch 1, 2, 3 oder 4, **dadurch gekennzeichnet, dass** die elektronische Vorrichtung eine erste und zweite Antenne (140, 141), wobei der erste beziehungsweise zweite Funkdämpfer mit programmierbarer Verstärkung, der auf der ersten beziehungsweise zweiten Funkschnittstelle angeordnet ist, mit der ersten beziehungsweise zweiten Antenne verbunden ist, umfasst.

7. Elektronische Vorrichtung (100, 200) nach Anspruch 1, 2, 3, 4, 5 oder 6, **dadurch gekennzeichnet, dass** das erste Funkmodul einem Bluetooth-Standard entspricht, wobei das zweite Funkmodul einem Zigbee-Standard entspricht.

8. Verfahren, das durch eine elektronische Vorrichtung (100, 200) ausgeführt wird und die Koexistenz eines ersten und zweiten Funkmoduls (110, 111, 210, 211), die ein gleiches Frequenzband nutzen, innerhalb der elektronischen Vorrichtung (100, 200) gestattet, das erste und zweite Funkmodul jeweils umfassend eine erste und zweite Funkschnittstelle, die elektronische Vorrichtung umfassend einen ersten und zweiten Funkdämpfer, deren Dämpfung programmierbar ist (120, 121, 220, 221), die jeweils auf der ersten und zweiten Funkschnittstelle angeordnet sind, die elektronische Vorrichtung umfassend einen Prozessor, das Verfahren umfassend die folgenden Schritte:
- Bestimmen (310), für jedes Funkmodul, eines Werts einer Dämpfung, der dem Funkmodul zugeordnet ist, wobei der Wert der Dämpfung in Abhängigkeit von einer maximalen zulässigen Leistung für das Funkmodul, einer maximalen Sendeleistung des anderen Funkmoduls und einer Isolierung zwischen der ersten und zweiten Funkschnittstelle bestimmt wird,
- Bestimmen (320), für jedes Funkmodul, eines Werts eines Qualitätsindikators einer Kommunikation, die mit dem Funkmodul aufgebaut ist, und,
wenn für das erste beziehungsweise zweite Funkmodul der Wert des Qualitätsindikators größer als ein vorbestimmter Schwellenwert (330) ist, wobei der vorbestimmte Schwellenwert von dem Wert der Dämpfung, der dem ersten beziehungsweise zweiten Funkmodul zugeordnet ist, und einer minimalen zulässigen Leistung für das erste beziehungsweise zweite Funkmodul abhängig ist:
- Programmieren (350) der Dämpfung des Funkdämpfers, der auf der Funkschnittstelle des Funkmoduls angeordnet ist, wobei die Dämpfung so gewählt wird, dass sie gleich dem Wert der Dämpfung ist, der dem ersten beziehungsweise zweiten Funkmodul zugeordnet ist.

9. Verfahren nach Anspruch 8, **dadurch gekennzeichnet, dass** das Verfahren die folgenden vorhergehenden Schritte umfasst:
- Bestimmen (300), für das erste beziehungsweise zweite Funkmodul, einer ersten Liste, die mindestens einen Funkkanal umfasst, der in dem Frequenzband enthalten ist, wobei das Funkmodul nur einen Kanal nutzt, der in dieser ersten Liste enthalten ist, um eine Funkkommunikation aufzubauen,
- Bestimmen (300), für das andere Funkmodul, einer zweiten Liste, die mindestens einen Funkkanal umfasst, der in dem Frequenzband enthalten ist und nicht in der ersten Liste enthalten ist, wobei das andere Funkmodul nur einen Kanal nutzt, der in dieser zweiten Liste enthalten ist, um eine Funkkommunikation aufzubauen.

10. Computerprogramm, **dadurch gekennzeichnet, dass** es Anweisungen umfasst, um durch einen Prozessor (101, 201) das Verfahren nach einem der Ansprüche 8 oder 9 umzusetzen, das die Koexistenz eines ersten und zweiten Funkmoduls (110, 111, 210, 211), die ein gleiches Frequenzband nutzen, innerhalb einer elektronischen Vorrichtung (100, 200) gestattet, wenn das Computerprogramm durch den Prozessor ausgeführt wird.

11. Informationsspeichermedium umfassend ein Computerprogramm nach dem vorhergehenden Anspruch.

## Claims

1. Electronic device (100, 200) comprising a first and a second radio module (110, 111, 210, 211) using one and the same radio frequency band and comprising a first and a second radio interface, respectively, the electronic device comprising a first and a second radio attenuator (120, 121, 220, 221), the attenuation of which is programmable, which are placed on the first and the second radio interface, respectively, the electronic device being suitable for:
- determining, for each radio module, a value of an attenuation associated with said radio module, the value of the attenuation being determined according to a maximum admissible power for said radio module, to a transmission power of the other radio module and to an isolation between the first and the second radio interface;
- determining, for each radio module, a value of an indicator of the quality of a communication established with said radio module; and
when, for the first or the second radio module, respectively, the value of the quality indicator is higher than a predetermined threshold value, the predetermined threshold value being dependent on the value of the attenuation associated with the first or with the second radio module, respectively, and on a maximum admissible power for the first or the second radio module, respectively:
- programming the attenuation of the radio attenuator placed on the interface of the first or of the second radio module, respectively, the attenuation being chosen to be equal to the value of the attenuation associated with the first or with the second radio module, respectively.

2. Electronic device according to Claim 1, **characterized in that** the electronic device is suitable for, when, for each radio module, the value of the quality indicator is higher than the predetermined threshold value:
- determining for which radio module the value of the indicator of the quality of an established communication is the highest; and
- programming the attenuation of the radio attenuator of said determined radio module.

3. Electronic device according to Claim 1 or 2, **characterized in that** the electronic device is further suitable for:
- determining, for the first or the second radio module, respectively, a first list comprising at least one radio channel within the frequency band, the first or the second radio module using, respectively, only a channel on this first list to establish a radio communication;
- determining, for the other radio module, a second list comprising at least one radio channel within the frequency band and not on the first list, said other radio module using only a channel on this second list to establish a radio communication.

4. Electronic device according to Claim 1, 2 or 3, **characterized in that** the electronic device is suitable for, when, for each radio module, the value of the quality indicator is lower than a predetermined threshold value:
- synchronizing the first and the second radio modules in order for the first and the second radio modules to be in the receiving or transmitting phase at the same time.

5. Electronic device (200) according to Claim 1, 2, 3 or 4, **characterized in that** the electronic device comprises a radio splitter (230) comprising an input that is connected to an antenna and two outputs that are connected to the first and the second radio attenuator (220, 221), respectively, the attenuation of which is programmable.

6. Electronic device (100) according to Claim 1, 2, 3 or 4, **characterized in that** the electronic device comprises a first and a second antenna (140, 141), the first or the second programmable-gain radio attenuator placed on the first or the second radio interface, respectively, being connected to the first or the second antenna, respectively.

7. Electronic device (100, 200) according to Claim 1, 2, 3, 4, 5 or 6, **characterized in that** the first radio module is compliant with a Bluetooth standard and the second radio module is compliant with a Zigbee standard.

8. Method executed by an electronic device (100, 200) and allowing the coexistence of a first and a second radio module (110, 111, 210, 211) using one and the same frequency band within the electronic device (100, 200), the first and the second radio module comprising a first and a second radio interface, respectively, the electronic device comprising a first and a second radio attenuator (120, 121, 220, 221), the attenuation of which is programmable, which are placed on the first and the second radio interface, respectively, the electronic device comprising a processor, the method comprising the following steps:
- determining (310), for each radio module, a value of an attenuation associated with said radio module, the value of the attenuation being determined according to a maximum admissible power for said radio module, to a maximum transmission power of the other radio module and to an isolation between the first and the second radio interface;
- determining (320), for each radio module, a value of an indicator of the quality of a communication established with said radio module; and
when, for the first or the second radio module, respectively, the value of the quality indicator is higher than a predetermined threshold value (330), the predetermined threshold value being dependent on the value of the attenuation associated with the first or with the second radio module, respectively, and on a maximum admissible power for the first or the second radio module, respectively:
- programming (350) the attenuation of the radio attenuator placed on the interface of the radio module, the attenuation being chosen to be equal to the value of the attenuation associated with the first or with the second radio module, respectively.

9. Method according to Claim 8, **characterized in that** the method comprises the following prior steps:
- determining (300), for the first or the second radio module, respectively, a first list comprising at least one radio channel within the frequency band, said radio module using only a channel on this first list to establish a radio communication;
- determining (300), for the other radio module, a second list comprising at least one radio channel within the frequency band and not on the first list, said other radio module using only a channel on this second list to establish a radio communication.

10. Computer program, **characterized in that** it comprises instructions for implementing, by means of a processor (101, 201), the method according to either of Claims 8 and 9 allowing the coexistence of a first and of a second radio module (110, 111, 210, 211) using one and the same frequency band within an electronic device (100, 200) when said computer program is executed by said processor.

11. Information storage medium comprising a computer program according to the preceding claim.
